# EUROPÄISCHE PATENTSCHRIFT

(11) **EP 1 616 800 B1**
(45) Veröffentlichungstag und Bekanntmachung des Hinweises auf die Patenterteilung: **17.11.2010**
(21) Anmeldenummer: 05010219.3
(22) Anmeldetag: 11.05.2005
(51) Int. Cl.: B65D 5/06, B65D 5/74, B65B 3/02

(54) **Verpackung sowie Verfahren zur deren Herstellung**
Packaging and method for making the same
Emballage et sa méthode de fabrication

(30) Priorität: 15.07.2004 DE 102004034348
(43) Veröffentlichungstag der Anmeldung: 18.01.2006
(73) Patentinhaber: Plümat Maschinenbau-Vertriebs-GmbH, 32339 Espelkamp (DE)
(72) Erfinder: Will, Wilhelm, 44532 Lünen (DE)
(74) Vertreter: Harrison, Robert John

(56) Entgegenhaltungen:
- WO-A-03/086880
- US-A- 4 527 699
- US-A- 5 088 642
- US-A- 6 016 953
- US-A1- 2004 104 513

## Beschreibung

Die Erfindung betrifft eine Verpackung nach dem Oberbegriff des Anspruchs 1 sowie ein Verfahren zur Herstellung einer Verpackung.

Aus der WO 03/059762 A2 ist eine gattungsgemäße Verpackung bekannt, deren Ausgießer nicht ausschließlich innerhalb einer einzigen Giebelfläche angeordnet ist, sondern in wenigstens zwei Giebelflächen hineinragt. Hierdurch ergibt sich vorteilhaft eine Ablaufrinne durch die Kante, an welcher die beiden Giebelflächen aneinander grenzen. Auf diese Weise kann die Verpackung beim Ausgießen so gehalten werden, dass eine Restentleerung über diese Ablaufrinne erfolgt. Weiterhin ist bei diesen gattungsgemäßen Verpackungen vorteilhaft, dass die Giebelflächen des Daches bedruckt werden können und beispielsweise Handhabungshinweise oder ähnliche Informationen enthalten können.

Die aneinander anstoßenden Giebelflächen dieser gattungsgemäßen Verpackung sind miteinander verschweißt. Allerdings erstrecken sich in einen Teil der so gebildeten Nahtlinie Vorsprünge vom Ausgießer, welche somit die Nahtlinie unterbrechen. Die zuverlässig dichte Ausgestaltung der Naht kann insbesondere im Bereich dieser Übergangsstelle problematisch sein, wo von einer Verschweißung unmittelbar der benachbarten Giebelflächen miteinander abgewichen wird und der in diese Nahtlinie hereinragende Vorsprung des Ausgießers anschließt.

Aus der EP 0 076 979 B1 ist eine gattungsfremde Verpackung bekannt, bei welcher das Dach komplett aus Kunststoff besteht und an das obere Ende der Wandflächen angespritzt wird. Aus einer Kunststofffolie bestehende Verstärkungsstreifen sind am Kartonzuschnitt vor dessen Auffaltung zum Behältertubus dort angebracht, wo dieser Kartonzuschnitt während der Herstellung des Behälters mechanisch besonders beansprucht wird, beispielsweise an den Biegelinien, um eine besonders dünne Kunststoffbeschichtung an diesen mechanisch belasteten Stellen nicht zu zerstören.

Aus der EP 0 388 647 A2 ist eine gattungsgemäße Verpackung bekannt, bei der die Giebelflächen des Dachs als Wandfelder einstückig mit den Wandfeldern ausgestaltet sind, welche die Wandflächen des tubusförmigen Teils der Verpackung bilden. Um Kunststoff in den Bereich der Nahtstellen zwischen benachbarten Giebelflächen einzuspritzen, muss die gesamte Verpackung gehandhabt werden, wobei je nach Dimensionierung der Verpackung das Innere des Dachbereiches durch den offenen Boden der Verpackung erreicht werden muss, so dass insgesamt eine vergleichsweise umständliche Handhabung bei der Herstellung des Behälters resultiert.

Aus der DE 32 17 156 C2 ist eine Verpackung bekannt, bei welcher das Dach als einheitlicher Kunststoffkörper gefertigt wird, welcher anschließend mit dem tubusartigen, aus Kartonmaterial gebildeten Behälterteil verbunden wird. Die Bedruckbarkeit des Daches, welches aus Kunststoff besteht und Schrägflächen aufweist, ist im Vergleich zur Bedruckbarkeit der Kartonzuschnitte des übrigen Behälters erheblich schwieriger und aufwendiger.

Aus der Praxis ist weiterhin eine Verpackung bekannt, beispielsweise für Fruchtsäfte und Getränke. Dabei weist die Verpackung einen quadratischen Grundriss auf und ist im übrigen säulenförmig, mit einem Fassungsvermögen von etwa einem Liter ausgestaltet. Das Dach weist insgesamt vier Giebelflächen auf, wobei zwei kleinere, unten liegende Giebelflächen durch zwei größere obere Giebelflächen teilweise abgedeckt werden. Der Verschluss der Verpackung, über den das Getränke entnommen werden kann, besteht aus Kunststoff und weist einen mit Außengewinde versehenen, rohrstutzenförmigen Ausgießer auf sowie eine Verschlusskappe, die mit dem Stutzen verschraubt ist. Die vollständige Entleerung derartiger, gattungsfremder Verpackungen ist schwierig oder unmöglich, da stets ein Teil der Flüssigkeit neben dem Ausgießer entlang in das Dach fließt, wenn die Verpackung mit dem Dach schräg nach unten weisend ausgerichtet wird.

Dokument US 2004/0104513 A1 beschreibt ein Verfahren zur Herstellung einer Verpackung bzw. eines Behälters, wobei beschichtetes Halbzeug aus Pappe in eine Form gelegt und, entsprechend der Gestalt der Verpackung bzw. der Form, umgeformt wird oder ein in Einzelteilen vorliegendes beschichtetes Halbzeug in eine entsprechende Form eingelegt wird. Des Weiteren wird mit Hilfe eines Spritzgussvorgangs Kunststoff, d. h. Polymer in die jeweiligen Bereiche gebracht, um das Halbzeug zusammenzuhalten und an den jeweiligen Nähten bzw. Rändern dicht zu machen und so die Verpackung zu bilden. Weiter ist im Sinne eines einfachen Gebrauchs der Verpackung vorgesehen, einen Griff unter Anwendung eines Spritzgussvorgangs zu fertigen. Zusätzlich wird angegeben, dass eine Öffnung der Verpackung im Bereich des Kopfes, welche als Ausgießer dient, ebenso durch Spritzgießen hergestellt werden kann.

Dokument US 6,016,953 beschreibt einen aus vier Flächen bzw. Abschnitten bestehenden Kopfbereich bzw. einen dazugehörigen, vier Seitenflächen aufweisenden Verpackungsgrundkörper sowie ein zur Herstellung der Verpackung entsprechend vorgesehenes Halbzeug der Verpackung. Benachbarte, entsprechend gefaltete Teilbereiche der Abschnitte des Kopfbereiches sind dabei überlappend miteinander versiegelt bzw. verklebt. Die Flächen bzw. Abschnitte des Halbzeugs für den Kopfbereich sind dabei so ausgebildet, dass sie beim Zusammenfalten, d.h. nach dem Umformvorgang des Halbzeugs eine entsprechende Aussparung für einen integrierbaren Ausgießer bereitstellen. Alternativ wird vorgeschlagen, den Ausgießer in einen der vier Abschnitte zu integrieren. Eine Vielzahl von vertikal und horizontal verlaufenden Kerblinien auf dem Halbzeug definiert dabei die Geometrien der Abschnitte. Das Halbzeug besteht im Wesentlichen aus Faserplattenmaterial, welches mit Polyethylen beschichtet ist.

Dokument WO 03/086880 beschreibt eine Verpackung gemäß Oberbegriff des Anspruchs 1.

Der Erfindung liegt die Aufgabe zugrunde, eine gattungsgemäße Verpackung dahingehend zu verbessern, dass diese unter Beibehaltung der Bedruckungsmöglichkeit des Daches und einer möglichst vollständigen Entleerbarkeit und eine möglichst hygienische Ausgestaltung der Verpackung ermöglicht.

Diese Aufgabe wird durch eine Verpackung mit den Merkmalen des Anspruchs 1 und ein Verfahren mit den Schritten des Anspruchs 9 gelöst.

Die Erfindung schlägt mit anderen Worten vor, die vorteilhafte Bedruckbarkeit des Daches dadurch beizubehalten, dass auch bei der vorschlagsgemäßen Ausgestaltung die Giebelflächen durch Kartonzuschnitte gebildet sind. Wo die Giebelflächen aneinander stoßen und wo sie an die Wandflächen der Verpackung stoßen, sind jedoch Verbindungselemente aus Kunststoff vorgesehen, so dass überlappende, Falten bildende Anordnungen der Kartonzuschnitte im Bereich des Daches ausgeschlossen werden können. Hierdurch wird einerseits die Restentleerbarkeit der Verpackung erleichtert, so dass eine möglichst vollständige Ausnutzung des in der Verpackung enthaltenen Produktes möglich ist und weiterhin nach einem ersten Anbruch der Verpackung Verkeimungsgefahren während längerer Aufbewahrungszeiten reduziert werden, da keine Falten oder Taschen im Bereich des Daches gebildet werden, in denen sich das Produkt, Keimnester bildend, sammeln kann. Vielmehr fließt das Produkt aus dem Dachbereich vollständig und problemlos nach unten in den Behälter ungehindert ab.

Eine zuverlässige Befestigung des Ausgießers wird vorschlagsgemäß dadurch verwirklicht, dass der Ausgießer an den Kunststoffstegen befestigt ist, die wie vorgenannt die Giebelflächen miteinander verbinden und an einem Rahmen angeordnet sind, der seinerseits die gesamte Dachkonstruktion der Verpackung mit den Wandflächen der Verpackung verbindet.

Zur Halterung der Kartonabschnitte des Daches ist vorschlagsgemäß vorgesehen, dass die Stege und der Rahmen jeweils Nuten aufweisen, in welche diese Kartonzuschnitte mit ihren Randbereichen eingesetzt sind, so dass die Kartonzuschnitte zuverlässig am Behälteräußeren sowie auch im Behälterinneren von den Stegen und dem Rahmen des Daches umfasst sind. Hierdurch kann eine "dichte" Ausgestaltung des Behälters ermöglicht werden, beispielsweise für trockene rieselfähige Schüttgüter, selbst wenn die Kartonzuschnitte lose in diese Nuten eingesetzt sind. Insbesondere wenn jedoch eine Verklebung, Verschweißung oder dergleichen vorgesehen ist, wird gemäß dem vorgeschlagenen Verfahren nach Anspruch 9 eine zuverlässig flüssigkeits- und ggf. gasdichte Verbindung zwischen Kartonzuschnitt und Steg bzw. Rahmen ermöglicht, so dass auch flüssige Produkte problemlos in der vorgeschlagenen Verpackung gelagert werden können.

Vorzugsweise kann die Verpackung einen mehreckigen gleichschenkligen Grundriss aufweisen, beispielsweise in Form eines gleichschenkligen Dreiecks oder eines Quadrats ausgestaltet sein. Hierdurch ergeben sich optimal dichte Packungsanordnungen einer Vielzahl der Verpackungen auf einem Tray bzw. auf einer Palette. Zudem wird vorschlagsgemäß bei derartigen Anordnungen der Ausgießer in der Mitte des Daches angeordnet. Auf diese Weise ergibt sich automatisch, dass der Ausgießer an sämtliche Giebelflächen angrenzt und somit eine Vielzahl von Ablaufrinnen das Produkt zum Ausgießer führt, wenn die Verpackung mit dem Dach nach unten gehalten wird, so dass unabhängig von einer bestimmten, vom Benutzer zu beachtenden Ausrichtung der Verpackung stets die vorbeschriebene vollständige Restentleerung ermöglicht wird.

Dadurch, dass der Ausgießern vorschlagsgemäß in wenigstens zwei Giebelflächen hineinragt, kann er hinsichtlich seines Durchmessers größer dimensioniert werden als bei den bekannten, gattungsbildenden Verpackungen, bei denen der Ausgießer innerhalb einer einzelnen Giebelfläche angebracht und befestigt sein muss. Der Ausgießer kann daher vorschlagsgemäß vorteilhaft einen Durchmesser von wenigstens etwa 40 mm aufweisen. Hierdurch wird nicht nur die Entleerung auch zähflüssiger bzw. stückiger Produkte erleichtert, beispielsweise Fruchtjogurt, sondern der Ausgießer kann auch wenn er beispielsweise mit einem Schraubdeckel verschlossen ist, auf besonders kraftsparende Weise geöffnet und verschlossen werden, so dass die Handhabung beispielsweise für ältere Personen oder Kinder erheblich vereinfacht werden kann.

In besonders wirtschaftlicher Ausgestaltung kann vorteilhaft der Ausgießer, also Rohrstutzen ausgebildet, mit den Stegen und dem Rahmen des Daches als einstückiges Spritzgussteil aus Kunststoff ausgestaltet sein.

Vorteilhaft kann die Verpackung einen mehreckigen Grundriss aufweisen, wobei sich die Stege von den Ecken des Rahmens zum Ausgießer erstrecken und dadurch mehrere Ablaufrinnen schaffen, die eine vollständige Restentleerung des Behälters sicherstellen, selbst wenn der Behälter keinen beispielsweise quadratischen oder ansonstigen gleichschenkligen Grundriss aufweist.

Bei der Herstellung der vorgeschlagenen Verpackung kann vorzugsweise und in an sich branchenüblicher Weise aus einem Kartonzuschnitt ein Rohrkörper gefaltet werden, dessen Längsnaht versiegelt wird. Vorschlagsgemäß wird das gesamte Dach vorgefertigt und anschließend an dem entsprechenden Stirnende des Rohrkörpers angebracht.

Vorschlagsgemäß wird eine zuverlässig dichte Ausgestaltung des Daches dadurch erzielt, dass die Kartonzuschnitte in die Spritzgussform eingelegt wurden und anschließend mit Kunststoff umspritzt werden, wobei der Kunststoff den Ausgießer, die Stege und den Rahmen des Daches bildet. Dabei werden die Kartonzuschnitte automatisch mit dem angrenzenden Kunststoff verbunden und eine besonders zuverlässige Festlegung der Kartonzuschnittes des Daches dadurch erzielt, dass die Kanten dieser Kartonzuschnitte beidseitig von dem angespritzten Kunststoff umfasst werden. Hierdurch werden zudem in hygienisch vorteilhafter Weise offene Schnittkanten der Kartonzuschnitte abgedichtet und somit verschlossen.

Es kann vorzugsweise vorgesehen sein, dass erst nach Anbringung des Daches die gegenüberliegende Bodenseite erstellt wird, also an der gegenüberliegenden Stirnseite des Rohrkörpers der Boden geschaffen wird. Auf diese Weise ist sichergestellt, dass bei der Anbringung des Daches an den Rohrkörper eine gute Zugänglichkeit zum Rahmen vom Inneren der Verpackung her, also des Rohrkörpers her, gegeben ist, so dass eine besonders zuverlässige und dichte Verbindung des Rahmens mit den Wandflächen erfolgen kann. Dies kann beispielsweise dadurch erfolgen, dass im Inneren des Rohrkörpers ein Widerlager, auch als Amboss bezeichnet, die Wandflächen abstützt, während von außen der Rahmen gegen die Wandfläche gedrückt und mit der Wandfläche verklebt bzw. verschweißt wird, beispielsweise durch Ultraschall-Verschweißung.

Diese Verbindung zwischen den Stegen bzw. dem unteren Rahmen des Daches und den Kartonzuschnitten kann besonders vorteilhaft zuverlässig dicht sein, wenn die Kartonzuschnitte ebenfalls Kunststoff enthalten, beispielsweise in Form einer Kunststoffbeschichtung. Durch die Temperatur des angespritzten Kunststoffs in der Spritzgussform wird dieser Kunststoff angelöst und innig mit dem angespritzten Kunststoff verbunden, wobei eine regelrechte Verschmelzung zugunsten einer innigen Verbindung vorgesehen sein kann.

Eine besonders zuverlässige Festlegung der Kartonzuschnittes des Daches kann dadurch vorgesehen sein, dass die Kanten dieser Kartonzuschnitte beidseitig von dem angespritzten Kunststoff umfasst werden.

Vorzugsweise kann der Boden aus Bodenlaschen gebildet sein, die unmittelbar an die Wandflächen der Verpackung angrenzen und Teil desselben Kartonzuschnitts sind. Diese Bodenlaschen werden gegenüber den Wandflächen abgewinkelt und miteinander gesiegelt, also in einer für das Produkt ausreichenden Dichtigkeit miteinander verbunden. Beispielsweise wenn der Kartonzuschnitt mit einer Kunststoffbeschichtung versehen ist, kann eine Siegelung unmittelbar durch diese Kunststoffschicht vorgesehen sein, andernfalls können in an sich bekannter Weise speziell an den zu versiegelnden Kanten so genannte Siegelstreifen in Form von Kunststoffstreifen verwendet werden.

Vorteilhaft kann der Boden erst dann gebildet werden, wenn die Verpackung bereits mit dem Produkt befüllt ist. Dies bedeutet, dass der Kartonzuschnitt zunächst mit dem Dach versehen wird, wobei der Ausgießer verschlossen ist, beispielsweise durch den vorerwähnten Schraubdeckel. Im Gegensatz zum freien Querschnitt des Ausgießers ist der freie Querschnitt der Bodenfläche erheblich größer, so dass die Befüllung der Verpackung mit einer erheblich größeren Füllgeschwindigkeit durch die Bodenöffnung erfolgen kann. Anschließend wird in an sich bekannter Weise der Boden geschlossen, in dem die entsprechenden Bodenlaschen miteinander verbunden werden oder ein separater Boden an die Wandflächen angesetzt wird.

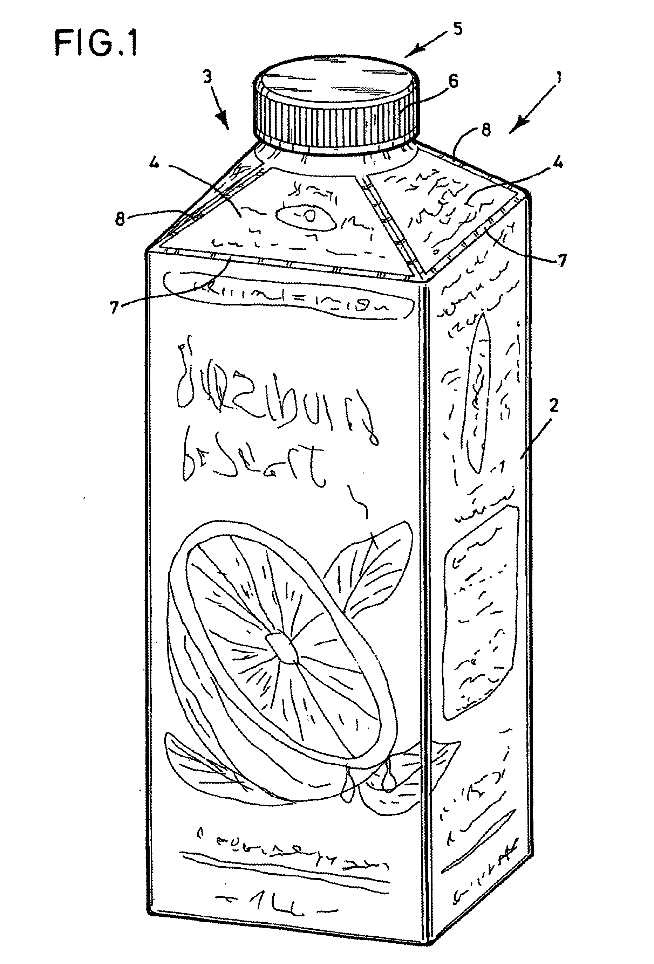

Ein Ausführungsbeispiel der Erfindung wird anhand der rein schematischen Zeichnungen nachfolgend näher erläutert. Dabei zeigt die
- Fig. 1: eine als Flüssigkeitsbehälter dienende Verpackung in perspektivischer Ansicht,
- Fig. 2: einen Schnitt durch den oberen Bereich der Verpackung von Fig. 1,
- Fig. 3: eine Draufsicht auf die Verpackung von Fig. 1,
- Fig. 4: einen vertikalen Schnitt durch den Übergangsbereich zwischen Wand und Dach der Verpackung,
- Fig. 5: einen Schnitt durch eine Spritzgussform zur Herstellung eines Teils des Daches,
- Fig. 6: eine schematische Anordnung von Kartonzuschnitten zur Herstellung des Daches,
- Fig. 7: den oberen Bereich der Wandflächen des Behälters, die unterhalb des in Fig. 2 dargestellten Daches des Behälters dargestellt ist, und
- Fig. 8: eine Produktionsanlage zur Herstellung und Befüllung der Verpackung.

In den Zeichnungen ist mit 1 insgesamt eine Verpackung bezeichnet, die als vertikaler, etwa säulenförmiger Behälter mit quadratischem Grundriss ausgestaltet ist. Die Verpackung 1 weist vier Wandflächen 2 auf sowie ein Dach 3 weist vier Giebelflächen 4 auf sowie einen Ausgießer 5, der als Rohrstutzen mit Außengewinde ausgestaltet ist und durch einen Schraubdeckel 6 verschlossen ist. Die Giebelflächen 4 des Daches 3 sind durch Kartonzuschnitte gebildet, die an ihrem oberen Ende an den Ausgießer 5 grenzen, an ihrem jeweils unteren Ende an einen ringsum laufenden Rahmen 7 und seitlich an Stege 8, die jeweils vom Rahmen 7 zum Ausgießer 5 verlaufen.

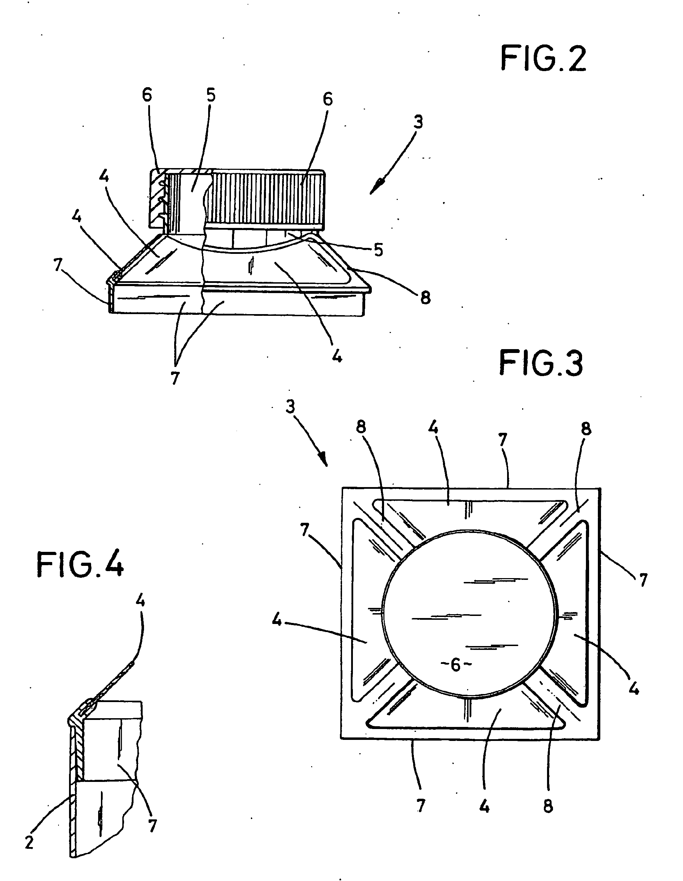

Fig. 4 zeigt, dass die Giebelflächen 4 am Rahmen 7 in einer durch den Rahmen 7 gebildeten Nut aufgenommen sind, so dass der Rahmen 7 die Giebelflächen 4 an ihren Unterkanten beidseitig umgreift. In gleicher Weise sind die Giebelflächen 4 auch beidseitig von den Stegen 8 und vom Ausgießer 5 umgriffen, so dass eine für das jeweils aufzubewahrende Produkt dichte Ausgestaltung des Daches 3 gewährleistet ist. Wenn die Verpackung 1 Flüssigkeiten aufnehmen soll, sind die Giebelflächen 4 mit dem Ausgießer 5, den Stegen 8 und dem Rahmen 7 verklebt oder verschweißt, so dass eine flüssigkeitsdichte und ggf. gasdichte Ausgestaltung des Daches 3 verwirklicht ist.

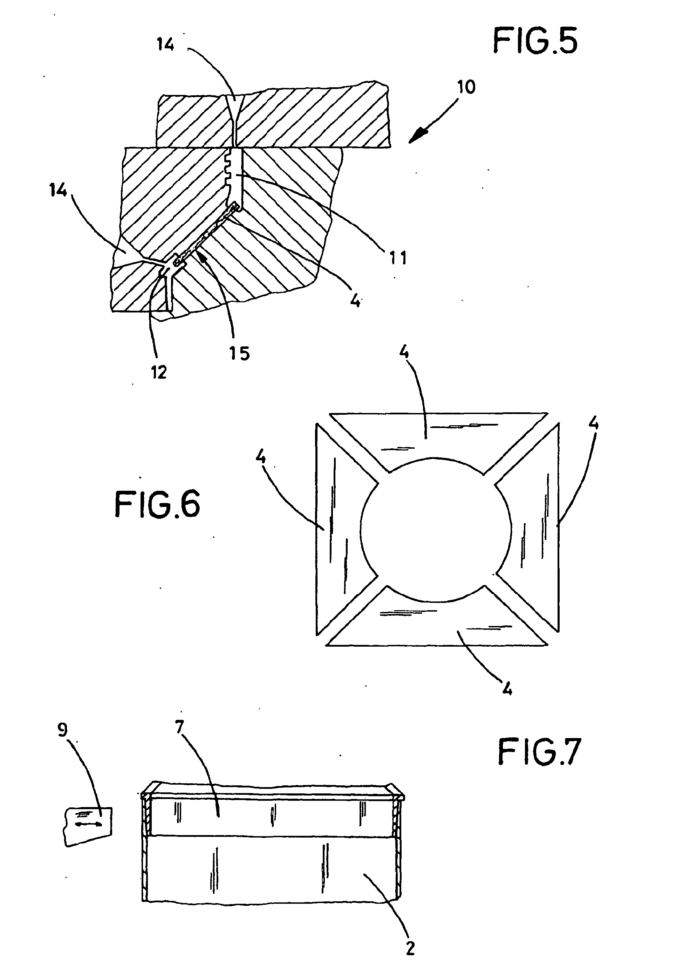

Die Fig. 2 und 4 zeigen weiterhin, dass der Rahmen 7 eine vergleichsweise weit nach unten ragende Schürze bildet, die sich mit dem obersten Randstreifen der Wandflächen 2 überlappt, so dass in diesem Überlappungsbereich eine zuverlässige Verbindung zwischen dem Dach 3 und den Wandflächen 2 geschaffen werden kann. Die Anbindung der Giebelflächen 4 an den Ausgießer 5 ist in Fig. 2 schematisch vereinfacht dargestellt und aus Fig. 5 deutlicher erkennbar.

Anhand von Fig. 7 ist angedeutet, dass das in Fig. 2 oberhalb der Wandflächen 2 dargestellte Dach 3 abgesenkt werden kann, wobei sich gemäß Fig. 4 die durch den Rahmen gebildete Schürze in das Innere des Rohrabschnitts erstreckt, der durch die Wandflächen 2 gebildet wird. Von außen wird ein Schweißkopf 9 an die Wandfläche 2 gefahren, während von innen der Rahmen 7 durch ein entsprechendes Widerlager, in Fig. 7 nicht dargestellt, abgestützt wird, so dass der Rahmen 7 und die entsprechende Wandfläche 2 zwischen diesem Widerlager und dem Schweißkopf 9 zur Anlage aneinander gebracht werden und miteinander verschweißt können. Der Schweißkopf 9 kann beispielsweise als Ultraschall-Schweißkopf ausgestaltet sein.

Fig. 5 erläutert die Herstellung des Daches 3: In Fig. 5 ist eine mehrteilige Spritzgussform 10 dargestellt. Diese weist einen oberen Formhohlraum 11 auf, in welchem der Ausgießer 5 mitsamt seinem Außengewinde gebildet wird. Weiterhin weist die Spritzgussform 10 einen unteren Formhohlraum 12 auf, in welchem der umlaufende Rahmen 7 gebildet wird. Zwischen dem oberen Formhohlraum 11 und dem unteren Formhohlraum 12 erstrecken sich vier Verbindungsleitungen, die in Fig. 5 nicht ersichtlich sind und welche zur Bildung der Stege 8 dienen. Auf diese Weise werden der Ausgießer 5, die Stege 8 und der umlaufende Rahmen 7 als ein einziges Spritzgussteil erstellt. Der Zulauf des Kunststoffs erfolgt durch mehrere Zuläufe 14, von denen in Fig. 5 zwei angedeutet sind.

In Fig. 5 ist weiterhin ein mittlerer Formhohlraum 15 erkennbar, der allerdings nicht zur Ausfüllung durch Kunststoff vorgesehen ist, sondern zur Aufnahme eines Kartonzuschnitts, welcher die Giebelfläche 4 bilden soll. In Fig. 5 ist angedeutet, dass dieser mittlerer Formhohlraum 15 mit einem derartigen Kartonzuschnitt einer Giebelfläche 4 bestückt ist. Dabei ist ersichtlich, dass dieser Kartonzuschnitt der Giebelfläche 4 so weit in den oberen und den unteren Formhohlraum 11, 12 hineinragt, dass er an seinen Kanten von dem Kunststoff umfasst werden wird, der in diese Formhohlräume 11, 12 hineinströmt. Das gleiche gilt für die Formhohlräume 15, welche zur Ausbildung der Stege 8 dienen, denn auch dort ist die Ausgestaltung dieser Formhohlräume 15 so vorgesehen, dass der Kartonzuschnitt der Giebelfläche 4 beidseitig umfasst wird.

Die Temperatur des eingespritzten Kunststoffmaterials kann so gewählt sein, dass eine an dem Kartonzuschnitt vorgesehene Kunststoffbeschichtung angelöst bzw. angeschmolzen wird und sich eine innige, flüssigkeits- und gasdichte Verbindung zwischen dem eingespritzten Kunststoff und dem Kunststoffanteil des Kartonzuschnitts ergibt.

Fig. 6 zeigt die vier Kartonzuschnitte der Giebelflächen 4.

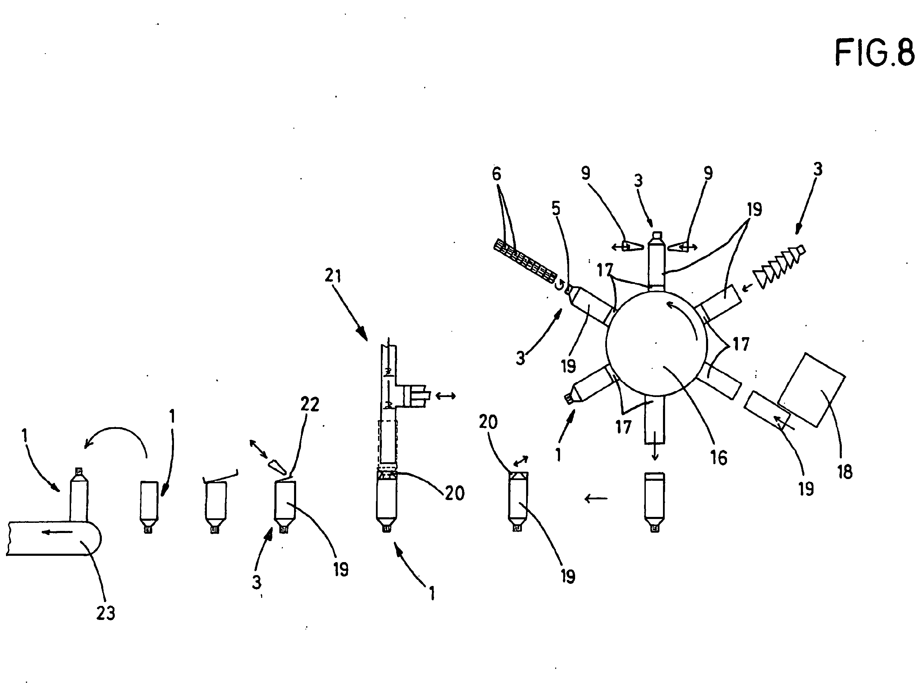

In Fig. 8 ist rechts ein Karussell 16 dargestellt, welches rein beispielhaft mit sechs Dornen 17 versehen ist. Auf der Position von etwa vier Uhr ist ein Kartonzuschnitt 18 angedeutet, der gefaltet wird und als Rohrabschnitt 19 auf den Dorn 17 aufgeschoben wird, wobei abweichend von dieser Verfahrensweise vorgesehen sein kann, den Kartonzuschnitt 18 an den Dorn 17 anzulegen und um den Dorn 17 herum zu falten und anschließend die Längsnaht des Rohrabschnittes 19 zu versiegeln. Das Karussell bewegt sich entgegen dem Uhrzeigersinn, so dass dieser Kartonzuschnitt 19 anschließend auf die bei etwa zwei Uhr dargestellte Position gelangt. Dort wird aus einem Vorrat an vorgefertigten Dächern 3 ein Dach an den Kartonzuschnitt 19 angesetzt und provisorisch gehalten.

Beim nächsten Fertigungstakt, etwa bei zwölf Uhr angedeutet, erfolgt die bereits vorerwähnte Verbindung zwischen dem Dach 3 und dem Rohrabschnitt 19 durch Schweißköpfe 9.

Beim nächsten Fertigungsschritt, etwa bei zehn Uhr dargestellt, wird ein Schraubdeckel 6 automatisch auf den Ausgießer 5 des Daches 3 aufgeschraubt.

Bei der Position, die etwa bei acht Uhr dargestellt ist, ist die Verpackung 1 nun entnahmefertig und bereits mit ihrem Dach 3 nach unten weisend ausgerichtet. Sie gelangt nun von dem Karussell 16 zur nächsten, weiter links dargestellten Fertigungsposition, wo in dem nach oben weisenden Bodenbereich 20 des Rohrabschnitts 19 der Boden vorgefaltet wird, um das spätere Versiegeln der Bodenlaschen zu erleichtern und beim Versiegeln ansonsten nicht auszuschließende, unzulässige Verformungen des dann gefüllten Behälters zu vermeiden.

In dem nächsten, weiter links dargestellten Produktionsabschnitt wird die in ihrem Bodenbereich 20 offene Verpackung auf eine Befüllstation 21 geschoben, wobei durch die maximale freie Querschnittsöffnung der Verpackung 1 eine besonders schnelle Befüllung der Verpackung 1 möglich ist.

Bei den beiden nächsten weiter links dargestellten Produktionsstationen wird der Bodenbereich 20 gefaltet und versiegelt, so dass die den Bodenbereich 20 bildenden Bodenlaschen 22 gegenüber dem Rohrabschnitt 19 abgewinkelt, aneinander angelegt und miteinander produktdicht verbunden werden.

Die beiden letzten, links dargestellten Produktionsstufen betreffen einerseits das Umdrehen der Verpackung 1, so dass sein bislang nach unten gerichtetes Dach 3 nach oben gerichtet ist und auf ein Transportband 23 gestellt werden kann.

## Patentansprüche

1. Verpackung (1) für schüttfähige Produkte,
bestehend aus einem Kartonmaterial, welches eine Bodenfläche, Wandflächen (2) sowie ein Dach (3) der Verpackung (1) bildende Giebelflächen (4) bildet,
wobei am Dach (3) ein verschließbarer Ausgießer (5) und ein aus einem anderen Material bestehender Verschluss (6) der Verpackung (1) vorgesehen ist,
wobei der Ausgießer (5) in wenigstens zwei Giebelflächen (4) hineinragt, **dadurch gekennzeichnet, dass**
Vorsprünge des Ausgießers (5) als Stege (8) ausgestaltet sind, die sich zwischen den Giebeflächen (4) bis zu einem Rahmen (7) erstrecken und mit diesem einteilig verbunden sind,
wobei der Rahmen (7) zwischen Wand- und Giebelflächen verläuft und
an seinem unteren Ende eine Schürze aufweist, die mit den Wandflächen verbunden ist.

2. Verpackung (1) nach Anspruch 1, **dadurch gekennzeichnet,**
**dass** der Rand schräg nach innen gerichtet ist.

3. Verpackung (1) nach einem der vorhergehenden Ansprüche, **dadurch gekennzeichnet, dass** sich der Rand bis zu seinem unteren Ende hin verjüngt.

4. Verpackung (1) nach einem der vorhergehenden Ansprüche, **dadurch gekennzeichnet, dass** die Stege (8) und der Rahmen (7) Nuten aufweisen, welche jeweils eine Kante der Kartonzuschnitte der Giebelflächen (4) aufnehmen.

5. Verpackung (1) nach einem der vorhergehenden Ansprüche, **dadurch gekennzeichnet, dass** die Verpackung (1) einen mehreckigen gleichschenkligen Grundriss aufweist und der Ausgießer (5) in der Mitte des Daches (3) angeordnet ist.

6. Verpackung (1) nach einem der vorhergehenden Ansprüche, **dadurch gekennzeichnet, dass** der Ausgießer (5) einen Durchmesser von wenigstens etwa 40 mm aufweist.

7. Verpackung (1) nach einem der vorhergehenden Ansprüche, **dadurch gekennzeichnet, dass** ein Rohrstutzen des Ausgießers (5), die Stege (8) und der Rahmen (7) als einstilckiges Spritzgussteil aus Kunststoff ausgestaltet sind.

8. Verpackung (1) nach einem der vorhergehenden Ansprüche, **dadurch gekennzeichnet, dass** die Verpackung (1) einen mehreckigen Grundriss aufweist und die Stege (8) von den sich dadurch ergebenden Ecken des Rahmens (7) zu dem Ausgießer (5) verlaufen.

9. Verfahren zur Herstellung einer Verpackung (1), die nach einem der vorhergehenden Ansprüche ausgestaltet ist, umfassend:
• Bereitstellung eines Daches (3),
• Herstellung eines Rohrkörpers (19) aus einem Kartonzuschnitt,
• Versiegelung der Längsnaht des Rohrkörpers (19),
• Anbringung des Daches (3) der Verpackung (1) mit seinem Rahmen (7) an der umlaufenden Kante eines der beiden Stirnenden des Rohrkörpers (19)

10. Verfahren nach Anspruch 12, umfassend:
Absenkung des Daches (3) in einen Rohrabschnitt des Rohrkörpers (19)

11. Verfahren nach Anspruch 12 oder 13, **dadurch gekennzeichnet, dass** nach der Anbringung des Daches (3) die gegenüberliegende Stirnseite des Rohrkörpers (19), den Boden der Verpackung (1) bildend, verschlossen wird.

12. Verfahren nach Anspruch 12, 13 oder 14, wobei zur Herstellung des Daches (3)
• Kartonzuschnitte in eine Spritzgussform eingelegt werden,
• anschließend Kunststoff in die Spritzgussform eingespritzt wird, den Ausgießer (5), die Stege (8) und den Rahmen (7) bildend,
• wobei die Kartonzuschnitte mit dem angrenzenden angespritzten Kunststoff verbunden werden,
• und die Kanten der Kartonzuschnitte jeweils beidseitig vom angespritzten Kunststoff umfasst werden

13. Verfahren nach Anspruch 15, **dadurch gekennzeichnet,**
**dass** die Kartonzuschnitte Kunststoff enthalten - wie in Form einer Beschichtung, welcher angelöst wird und mit dem angespritzten Kunststoff verschmilzt.

14. Verfahren nach einem der vorhergehenden Verfahrensansprüche, **dadurch gekennzeichnet,**
**dass** der Rahmen (7) mit der entsprechenden umlaufenden Kante der Wandflächen (2) verschweißt wird - wie mittels Ultraschall-Verschweißung.

15. Verfahren nach Anspruch 17, **dadurch gekennzeichnet,**
**dass** ein Schweißkopf (9) seitlich gegen den Rahmen (7) geführt wird und gegenüberliegend der Schweißstelle die Wandfläche (2) durch ein als Amboss bezeichnetes Widerlager abgestützt wird.

16. Verfahren nach einem der vorhergehenden Verfahrensansprüche, **dadurch gekennzeichnet,**
**dass** der Boden aus Bodenlaschen (22) gebildet wird, die gegenüber den Wandflächen (2) abgewinkelt und miteinander gesiegelt werden.

17. Verfahren nach einem der vorhergehenden Verfahrensansprüche, **dadurch gekennzeichnet,**
**dass** der Boden gebildet wird, nachdem die Verpackung (1) mit dem schüttfähigen Produkt befüllt ist.

## Claims

1. Packaging (1) for free-flowing products,
consisting of a cardboard material that forms a base area, wall areas (2) and gable areas (4) forming the roof (3) of the packaging (1),
whereby a closable pouring spout (5) and a fastening (6) of the packaging (1) consisting of another material are provided on the roof (3), whereby the pouring spout (5) projects into at least two gable areas (4), **characterised in that** projections of the pouring spout (5) are designed as bars (8) that extend between the gable areas (4) up to a frame (7) and are connected with this in one part, whereby the frame (7) runs between wall and gable areas and has an apron at its lower end that is connected with the wall areas.

2. Packaging (1) ) according to claim 1, **characterised in that** the edge is directed inward at an angle.

3. Packaging (1) according to one of the preceding claims, **characterised in that** the edge tapers towards its lower end.

4. Packaging (1) according to one of the preceding claims, **characterised in that** the bars (8) and the frame (7) comprise grooves, each of which receives an edge of the carton blanks of the gable areas (4).

5. Packaging (1) according to one of the preceding claims, **characterised in that** the packaging (1) comprises a polygonal equilateral layout and the pouring spout (5) is arranged in the middle of the roof (3).

6. Packaging (1) according to one of the preceding claims, **characterised in that** the pouring spout (5) has a diameter of at least about 40 mm.

7. Packaging (1) according to one of the preceding claims, **characterised in that** a tube socket of the pouring spout (5), the bars (8) and the frame (7) are formed as a single-piece plastic injection moulding part.

8. Packaging (1) according to one of the preceding claims, **characterised in that** the packaging (1) comprises a polygonal layout and the bars (8) run from the resulting corners of the frame (7) to the pouring spout (5).

9. Method for producing a packaging (1) that is designed according to one of the preceding claims, comprising:
- provision of a roof (3),
- production of a tubular body (19) from a cardboard blank,
- sealing of the longitudinal seam of the tubular body (19),
- attachment of the roof (3) of the packaging (1) with its frame (7) to the surrounding edge of one of the two head ends of the tubular body (19).

10. Method according to claim 12, comprising:
lowering of the roof (3) into a tubular section of the tubular body (19).

11. Method according to claim 12 or 13, **characterised in that** after attachment of the roof (3), the opposite head side of the tubular body (19) forming the base of the packaging (1) are closed.

12. Method according to claims 12, 13 or 14, whereby to produce the roof (3),
- cardboard blanks are placed in an injection mould,
- plastic is then injected into the injection mould, forming the pouring spout (5), the bars (8) and the frame (7),
- whereby the cardboard blanks are connected with the adjacent sprayed-on plastic,
- and the edges of the cardboard blanks are surrounded on both sides by sprayed-on plastic.

13. Method according to claim 15, **characterised in that**,
the cardboard blanks comprise plastic - as in the form of a coating, which is slightly dissolved and melts with the sprayed-on plastic.

14. Method according to one of the preceding method claims, **characterised in that**
the frame (7) is sealed with the corresponding surrounding edge of the wall areas (2) - as via ultrasonic sealing.

15. Method according to claim 17, **characterised in that**
one sealing head (9) is guided laterally against the frame (7), and opposite the sealing point the wall area (2) is supported by an abutment designated as the anvil.

16. Method according to one of the preceding method claims, **characterised in that**
the base is formed by bottom flaps (22) that are angled vis-à-vis the wall areas (2) and sealed together.

17. Method according to one of the preceding method claims, **characterised in that**
the base is formed after the packaging (1) is filled with the free flowing product.

## Revendications

1. Emballage (1) pour produits à verser comprenant un matériau en carton, qui forme des surfaces inclinées (4) formant une surface de fond, des surfaces de paroi (2) ainsi qu'un couvercle (3) de l'emballage (1),
dans lequel, au niveau du couvercle (3), un bec verseur (5) fermable et un bouchon (6) de l'emballage (1) constitué d'un autre matériau sont prévus,
dans lequel le bec verseur (5) avance dans au moins deux surfaces inclinées (4) **caractérisé en ce que** des saillies du bec verseur (5) sont agencées en tant que traverses (8) qui s'étendent entre les surfaces inclinées (4) jusqu'à un cadre (7) qui sont reliées en un seul morceau avec le cadre, dans lequel le cadre (7) s'étend entre des surfaces de paroi et des surfaces inclinées et comprend, à son extrémité inférieure, un tablier qui est relié avec les surfaces de paroi.

2. Emballage (1) selon la revendication 1, **caractérisé en ce que** le bord est orienté de manière oblique vers l'intérieur.

3. Emballage (1) selon l'une des revendications précédentes, **caractérisé en ce que** le bord rétrécit jusqu'à son extrémité inférieure.

4. Emballage (1) selon l'une des revendications précédentes, **caractérisé en ce que** les traverses (8) et le cadre (7) comprennent des rainures, qui reçoivent respectivement une arête des coupes de carton des surfaces inclinées (4).

5. Emballage (1) selon l'une des revendications précédentes, **caractérisé en ce que** l'emballage (1) comprend un plan à plusieurs coins de même longueur et le bec verseur (5) est agencé au milieu du couvercle (3).

6. Emballage (1) selon l'une des revendications précédentes **caractérisé en ce que** le bec verseur (5) comprend un diamètre d'au moins environ 40 mm.

7. Emballage (1) selon l'une quelconque des revendications précédentes, **caractérisé en ce qu'**une tubulure du bec verseur (5), les traverses (8) et le cadre (7) sont formés en matériau plastique, en un seul morceau.

8. Emballage (1) selon l'une quelconque des revendications précédentes, **caractérisé en ce que** l'emballage (1) comprend un plan à plusieurs côtés, et les traverses (8) s'étendent depuis les côtés du cadre (7) qui en découlent jusqu'au bec verseur (5).

9. Procédé de fabrication d'un emballage (1), qui est agencé selon l'une quelconque des revendications précédentes, comprenant :
la préparation d'un couvercle (3),
la réalisation d'un corps tubulaire (19) à partir d'une coupe de carton,
la vitrification de la soudure du corps tubulaire (19),
la mise en place du couvercle (3) de l'emballage (1) avec son cadre (7) au niveau de l'arête périphérique d'une des deux faces d'extrémités du corps tubulaire.

10. Procédé selon la revendication 9, comprenant le rabattement du couvercle (3) dans une coupe du corps tubulaire (19).

11. Procédé selon la revendication 12 ou 13, **caractérisé en ce que**, après la mise en place du couvercle (3), les côtés se recouvrant du corps tubulaire (19) formant le fond de l'emballage (1) sont fermés.

12. Procédé selon la revendication 12, 13 ou 14, dans lequel, pour la réalisation du couvercle (3) :
des coupes de carton sont alignées en un moule de moulage par injection,
ensuite la matière plastique est versée dans le moule de moulage par injection, formant le bec verseur (5), les traverses (8) et le cadre (7),
les coupes de carton étant reliées avec la matière plastique surmoulée attenante et les arêtes des coupes de carton sont respectivement entourées par la matière plastique injectée.

13. Procédé selon la revendication 15, **caractérisé en ce que** les coupes de carton comprennent de la matière plastique, comme sous la forme d'une couche qui devient dissoute en surface et qui fond avec la matière plastique surmoulée.

14. Procédé selon l'une quelconque des revendications de procédé précédentes, **caractérisé en ce que** le cadre (7) est soudé avec les arêtes périphériques correspondantes des surfaces de paroi (2) - comme au moyen d'une soudure par ultrason.

15. Procédé selon la revendication 17, **caractérisé en ce que** une tête de soudure (9) est amenée latéralement contre le cadre (7) et la surface de paroi (2) est en appui, opposée à la position de soudure, au moyen d'une butée appelée enclume.

16. Procédé selon l'une quelconque des revendications de procédé précédentes, **caractérisé en ce que** le fond est formé par des languettes de fond (22), qui sont courbées par rapport aux surfaces de paroi et qui sont scellées les unes avec les autres.

17. Procédé selon l'une quelconque des revendications de procédé précédentes, **caractérisé en ce que** le fond est formé après que l'emballage (1) ait été rempli avec le produit à verser.
